# EUROPÄISCHE PATENTSCHRIFT

(11) **EP 2 544 389 B1**
(45) Veröffentlichungstag und Bekanntmachung des Hinweises auf die Patenterteilung: **14.05.2014**
(21) Anmeldenummer: 11173299.6
(22) Anmeldetag: 08.07.2011
(51) Int. Cl.: H04J 3/06, G04G 7/00, G05B 19/00

(54) **Synchronisierung des Arbeitstakts und des Zeittakts in einem Automatisierungsnetzwerk mit mehreren Domänen**
Synchronisation of processing clock and time clock in an automation system with multiple domains
Synchronisation d'horloge de traitement et d'horloge de temps dans un système d'automatisation avec plusieurs domaines

(43) Veröffentlichungstag der Anmeldung: 09.01.2013
(73) Patentinhaber: Siemens Aktiengesellschaft, 80333 München (DE)
(72) Erfinder: Götz, Franz-Josef, 91180 Heideck (DE); Steindl, Günter, 92284 Poppenricht (DE)

(56) Entgegenhaltungen:
- DE-A1- 10 345 231
- DE-B3-102005 039 771
- REHNMAN M ET AL: "Synchronization in a force measurement system using EtherCAT", EMERGING TECHNOLOGIES AND FACTORY AUTOMATION, 2008. ETFA 2008. IEEE INTERNATIONAL CONFERENCE ON, IEEE, PISCATAWAY, NJ, USA, 15. September 2008 (2008-09-15), Seiten 1023-1030, XP031344736, ISBN: 978-1-4244-1505-2
- JASPERNEITE J ET AL: "Enhancements to the time synchronization standard IEEE-1588 for a system of cascaded bridges", FACTORY COMMUNICATION SYSTEMS, 2004. PROCEEDINGS. 2004 IEEE INTERNATIO NAL WORKSHOP ON VIENNA, AUSTRIA SEPT. 22-24, 2004, PISCATAWAY, NJ, USA,IEEE, 22. September 2004 (2004-09-22), Seiten 239-244, XP010756406, DOI: 10.1109/WFCS.2004.1377716 ISBN: 978-0-7803-8734-8
- PAOLO FERRARI ET AL: "On the Seamless Interconnection of IEEE1588-Based Devices Using a PROFINET IO Infrastructure", IEEE TRANSACTIONS ON INDUSTRIAL INFORMATICS, IEEE SERVICE CENTER, NEW YORK, NY, US, Bd. 6, Nr. 3, 1. August 2010 (2010-08-01), Seiten 381-392, XP011312327, ISSN: 1551-3203

## Beschreibung

Die Erfindung betrifft ein Verfahren zur Arbeitstakt- und Zeittaktsynchronisation einer untergeordneten Domain eines Automatisierungsnetzwerks, eine Vorrichtung zur Arbeitstakt- und Zeittaktsynchronisation einer untergeordneten Domain eines Automatisierungsnetzwerks sowie ein Computerprogramm-Produkt. ,

Bisher werden zur Synchronisation von Komponenten eines Automatisierungsnetzwerkes bezüglich des Arbeitstaktes als auch des Zeittaktes mindestens zwei unterschiedliche Sync-Domains benutzt. Der bisherige Stand der Technik bezüglich Arbeitstakt- als auch Zeittakt-Synchronisation von Komponenten eines Netzwerks ergibt sich aus den normierten Netzwerk-Zeit-Protokollen IETF SMTP, IEEE 1588 v2, IEEE 802.1AS, - IETF RFC "(S)NTP"IEC 61158 TYPE 10 - PTCP.

Rehnmann, M. und Gentzell, T., Synchronization in a Force Measurement System Using EtherCAT, Emerging Technologies and Factory Automation, 2008, EFTA 2008, IEEE International Conference on, IEEE, Piscataway, NJ, USA, 15. September 2008 (2008-09-15), Seiten 1023-1030, XP031344736, ISBN: 978-1-4244-1505-2, offenbaren eine Methode, wie Master und Slaves in einem Kraftmesssystem unter Nutzung von EtherCAT synchronisiert werden können.

Jasperneite J. et al., Enhancements to the time synchronization standard IEEE-15888 for a system of cascaded bridges, Factory Communication Systems, 2004. Proceedings. 2004 IEEE International NAL Workshop on Vienna, Austria Sept. 22-24, 2004, Piscataway, NJ, USA, IEEE, 22. September 2004 (2004-09-22), Seiten 239-244, XP010756406, DOI: 10.1109/WFCS.2004.1377716, ISBN: 978-0-7803-8734-8, offenbaren eine Methode zur Verbesserung der IEEE-15888 Standardmethode zur Synchronisation von PTP Slaves unter Nutzung einer "Umgehungsuhr".

Paolo Ferrara et a1., On the Seamless Interconnection of IEEE 15888-Based Devices Using a PROFINET 10 Infrastructure, IEEE TRANSACTIONS ON INDUSTRIAL INFORMATICS, IEEE SERVICE CENTER, New York, NY, US, Bd. 6, Nr. 3, 1. August 2010 (2010-08-01), Seiten 381-392, XP011312327, ISSN: 1551-3203, offenbaren eine Methode zur Synchronisation von verschiedenen Typen von industriellen Echtzeit Ethernet Netzwerken unter Nutzung eines "Synchronisations-Konverters" zur Umgehung einer "Boundary Clock".

DE 10 2005 039771 B3 (Halang Wolfgang A [DE]; Skambras Martin [DE]) vom 28. Dezember 2006 offenbart eine Einheit zur Verwaltung von Echtzeitprozessen ohne asynchrone Unterbrechungen. DE 103 45 231 A1 (Siemens AG [DE]) vom 24. Juni 2004 offenbart eine Methode zur Koordinierung mindestens einer Slavesteuereinheit mit einer Mastersteuereinheit.

Demgegenüber liegt der Erfindung die Aufgabe zugrunde, ein verbessertes Verfahren sowohl für die Arbeitstakt- als auch für die Zeittakt-Synchronisation von Sync-Slaves einer untergeordneten Domain eines Automatisierungsnetzwerks, eine verbesserte Vorrichtung zur gleichzeitigen Arbeitstakt- als auch für die Zeittakt-Synchronisation von Sync-Slaves einer untergeordneten Domain eines Automatisierungsnetzwerks sowie ein verbessertes Computerprogramm-Produkt zu schaften.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Es wird ein Verfahren zur Arbeitstakt- und Zeittaktsynchronisation einer untergeordneten Domain eines Automatisierungsnetzwerks geschaffen, umfassend eine Menge von zeitlich zu koordinierender Sync-Slaves, die von einem übergeordneten Zeit-Sync-Master einer übergeordneten Domain bezüglich des Zeittakts synchronisiert werden, wobei die Sync-Slaves von einem Takt-Sync-Master bezüglich des Arbeitstakts synchronisiert werden, wobei der Takt-Sync-Master Teil der untergeordneten Domain ist, wobei eine einzelne Synchronisierungsnachricht zur Synchronisierung der Sync-Slaves bezüglich deren Arbeitstakt und Zeittakt dient, wobei das Verfahren eine Mitteilung einer Differenz zwischen dem Zeittakt und dem Arbeitstakt unter Nutzung der Synchronisierungsnachricht umfasst, wobei als zusätzliche Information diese Differenz und die Synchronisierungsnachricht aufgenommen wird.

Mit anderen Worten wird also durch einen Zeit-Sync-Master einer übergeordneten Domain eines Automatisierungsnetzwerks die allgemeingültige Uhrzeit, wie z.B. die Internationale Atomzeit (TAI), an einen Takt-Sync-Master einer untergeordneten Domain des Automatisierungsnetzwerks mittels einer Synchronisierungsnachricht gesendet. Der Takt-Sync-Master der untergeordneten Domain des Automatisierungsnetzwerks übernimmt die Uhrzeit bzw. Zeittakt des Zeit-Sync-Masters der übergeordneten Domain und ermittelt gleichzeitig die Differenz zwischen dem Zeittakt und dem Arbeitstakt des Takt-Sync-Masters der untergeordneten Domain. Diese Differenz wird als Zusatzinformation in die Synchronisierungsnachricht integriert, welche dann vom Takt-Sync-Master an alle untergeordneten Sync-Slaves innerhalb der untergeordneten Domain verteilt wird. Jeder Sync-Slave der untergeordneten Domain erkennt diese Zusatzinformation bezüglich der Differenz zwischen Zeittakt und Arbeitstakt und berechnet aus dieser seine lokale Systemzeit.

Theoretisch können mit dem Verfahren beliebig viele Zeittakte bzw. beliebig viele logische Uhren beliebiger Art mit unterschiedlichen Zeiten, in einem Netzwerksystem, bestehend aus mehreren unabhängigen Teildomains, synchronisiert werden.

Ein Vorteil dieses Verfahrens liegt darin, dass nur eine einzige Synchronisierungsnachricht benötigt wird. Aus der gleichzeitigen Synchronisation von Arbeitstakt als auch Zeittakt mittels nur einer einzigen Synchronisierungsnachricht resultieren als weiterer Vorteil eine Reduzierung des Vernetzungsgrades und eine Verringerung des Bedarfs an zusätzlicher Hardware.

Unter einer Domain eines Automatisierungsnetzwerks versteht man eine Gruppe von Automatisierungskomponenten, in diesem Kontext als Sync-Slaves bezeichnet, deren Arbeitstakt von einem innerhalb der Domain den Sync-Slaves übergeordnetem Takt-Sync-Master vorgegeben und zeitlich synchronisiert wird. Ein Zeit-Sync-Master gehört der eine Hierachiestufe höher liegenden ,globalen' Domain an und liefert z.B. die allgemeingültige Zeit an die einzelnen der Takt-Sync-Master der verschiedenen untergeordneten Domains.

Ein Automatisierungsnetzwerk kann z.B. als industrielles Automatisierungsnetzwerk ausgebildet sein. Solche industriellen Automatisierungsnetzwerke können z.B. zur Steuerung und/oder Regelung von industriellen Anlagen (z.B. Produktionsanlagen, Förderanlagen usw.), Maschinen und/oder Geräten ausgebildet, eingerichtet und/oder vorgesehen sein. Insbesondere können Automatisierungsnetzwerke bzw. industrielle Automatisierungsnetzwerke Echzeit-Kommunikationsprotokolle (z.B. Profinet, Profibus, Real-Time-Ethernet)zur Kommunikation zumindest zwischen den an den Steuerungs- und/oder Regelungsaufgaben beteiligten Komponenten (z.B. zwischen den Steuerungseinheiten und den zu steuernden Anlagen und/oder Maschinen) aufweisen. Die sichere Übertragung von Daten über Speichermedien ist ebenfalls abgedeckt.

Weiterhin kann neben einem Echtzeit-Kommunikationsprotokoll aber auch noch mindestens ein weiteres Kommunikationsprotokoll (das z.B. nicht echtzeitfähig zu sein braucht) in dem Automatisierungsnetzwerk bzw. industriellen Automatisierungsnetzwerk vorgesehen sein, z.B. zum Überwachen, Einrichten, Umprogrammieren und/oder Umparametrieren einer oder mehrerer Steuerungseinheiten im Automatisierungsnetzwerk.

Ein Automatisierungsnetzwerk kann z.B. drahtgebundene Kommunikationskomponenten und/oder drahtlose Kommunikationskomponenten umfassen. Außerdem kann ein Automatisierungsnetzwerk zumindest eine Automatisierungseinrichtung umfassen.

Eine Automatisierungseinrichtung kann beispielsweise ein Computer, PC und/oder Controller mit Steuerungs-Aufgaben bzw. Steuerungs-Fähigkeiten sein. Insbesondere kann eine Automatisierungseinrichtung beispielsweise eine industrielle Automatisierungseinrichtung sein, die z.B. speziell zur Steuerung und/oder Regelung industrieller Anlagen ausgebildet, eingerichtet und/oder vorgesehen sein kann. Insbesondere können solche Automatisierungseinrichtungen bzw. industriellen Automatisierungseinrichtungen echtzeitfähig sein, d.h. eine Steuerung bzw. Regelung in Echtzeit ermöglichen. Dazu kann die Automatisierungseinrichtung bzw. die industrielle Automatisierungseinrichtung z.B. ein Echtzeitbetriebssystem umfassen und/oder zumindest unter anderem ein echtzeitfähiges Kommunikationsprotokoll zur Kommunikation (z.B. Profinet, Profibus, Real-Time-Ethernet) unterstützen.

Ein Automatisierungsnetzwerk umfasst mehrere Sensoren und Aktuatoren. Die Aktuatoren und Sensoren werden von zumindest einer Steuerungseinrichtung gesteuert. Die Aktuatoren, die Sensoren und die zumindest eine Steuerungseinrichtung tauschen Daten miteinander aus. Zum Datenaustausch wird ein Automatisierungsprotokoll verwendet. Die zumindest eine Steuerungseinrichtung steuert die Aktuatoren, die Sensoren und den Datenaustausch so, dass ein maschineller Fertigungsprozess abläuft, in dem z.B. ein Produkt hergestellt wird.

Eine industrielle Automatisierungseinrichtung kann z.B. eine speicherprogrammierbare Steuerung, ein Modul oder Teil einer speicherprogrammierbaren Steuerung, eine in einem Computer oder PC integrierte speicherprogrammierbare Steuerung sowie entsprechende Feldgeräte, Sensoren und/oder Aktoren, Einund/oder Ausgabegeräte oder Ähnliches zum Anschluss an einer speicherprogrammierbare Steuerung sein oder solche umfassen.

Als Automatisierungsprotokoll im Sinne der vorliegenden Erfindung wird jede Art von Protokoll verstanden, das zur Kommunikation mit Automatisierungs-Einrichtungen gemäß der vorliegenden Beschreibung vorgesehen, geeignet und/oder eingerichtet ist. Solche Automatisierungsprotokolle können beispielsweise das PROFIBUS-Protokoll (z. B. gemäß IEC 61158), ein PROFIBUS-DP-Protokoll, ein PROFIBUS-PA-Protokoll, ein PROFINET-Protokoll, ein PROFINET-IO-Protokoll, ein Protokoll gemäß AS-Interface, ein Protokoll gemäß IO-Link, ein KNX-Protokoll, ein Protokoll gemäß einer Mehrpunkt-Schnittstelle (Multipoint-Interface, MPI), ein Protokoll für eine Punkt-zu-Punkt-Kopplung (Point-to-Point, PtP), ein Protokoll gemäß den Spezifikationen der S7-Kommunikation (welches beispielsweise zur Kommunikation von speicherprogrammierbaren Steuerungen der Firma Siemens vorgesehen und eingerichtet ist) oder auch ein Industrial-Ethernet-Protokoll oder Real-Time-Ethernet-Protokoll bzw. weitere spezifische Protokolle für die Kommunikation mit Automatisierungsgeräten sein. Als Automatisierungsprotokoll im Sinne der vorliegenden Beschreibung können auch beliebige Kombinationen der vorgenannten Protokolle vorgesehen sein.

Nach einer Ausführungsform der Erfindung wird bei einer Integration der untergeordneten Domain in die übergeordnete Domain eines Automatisierungsnetzwerks der Arbeitstakt der Komponenten der untergeordneten Domain unverändert beibehalten.

Das Verfahren ist damit anwendbar bei Zusammenschalten und Trennen mehrerer Domains, ohne dass es zu Störungen des Betriebsablaufs oder langwierigen Anpassungsprozessen kommt, wobei beliebig viele untergeordnete Domains eines Automatisierungsnetzwerks sowohl in Serie als auch parallel geschaltet werden können.

Ein Vorteil diese Verfahrens liegt somit darin, dass der Arbeitstakt der Komponenten der jeweils in das Automatisierungsnetzwerk zu integrierenden Domain auch beim Prozess der Integration bzw. auch bei der Entkopplung ohne Unterbrechung und unbeeinflusst kontinuierlich weiterläuft, so dass der Betrieb der Automatisierungskomponenten beim Integrations- bzw. Entkopplungsprozess nicht unterbrochen wird. Dies impliziert, dass die lokalen Systemzeiten der Sync-Slaves und des Takt-Sync-Masters ohne eine Diskontinuität weiterlaufen. So kann jede einzelne Automatisierungskomponente kontinuierlich weiterlaufen, ohne zum Beispiel die Produktion zu unterbrechen. Außerdem wird keine künstliche Abhängigkeit wegen unterschiedlichen Arbeitstakten in einzelnen unabhängigen Modulen einer Automatisierungsanlage geschaffen.

Nach einer Ausführungsform der Erfindung wird bei einer Integration der untergeordneten Domain in die übergeordnete Domain der Zeittakt der untergeordneten Domain mit dem Zeittakt der übergeordneten Domain unmittelbar synchronisiert. Dies bedeutet in anderen Worten, dass die Rate Compensation zwischen der allgemeingültigen Uhrzeit des Zeit-Sync-Masters der globalen Domain und der lokalen Systemzeit des Takt-Sync-Masters der untergeordneten Domain gleich 0 gesetzt wird. Da somit der Takt-Sync-Master seinen Zeitgeber auf die Synchronisationsnachricht beispielsweise der externen Internationalen Atomzeit (TAI) ausrichtet, ihm sozusagen folgt, folgen alle Sync-Slaves dieser Internationalen Atomzeit (TAI), das heißt, die lokale Systemzeit jedes einzelnen Sync-Slaves ist identisch mit der externen vom Zeit-Sync-Master vorgegebenen Uhrzeit. Dies hat den Vorteil, dass zum Beispiel bei Protokollen abgegebene Zeitstempel tatsächlich die Internationale Atomzeit (TAI) als gemeinsame Referenz benutzen.

Nach einer Ausführungsform der Erfindung sind der Arbeitstakt und der Zeittakt durch absolute Zeitangaben gegeben. Dies hat den Vorteil, dass die Schwingungsfrequenzen des jeden Sync-Slaves immanenten Quarzes einheitlich und somit vergleichbar dargestellt werden, und der Arbeitstakt und der Zeittakt somit identische Dimensionen aufweisen. Dadurch lässt sich auch die Differenz zwischen Arbeitstakt und Zeittakt besser visualisieren und auch auf einfachere Weise berechnen.

Nach einer Ausführungsform der Erfindung kann jeder einzelne Sync-Slave der untergeordneten Domain die in der Synchronisierungsnachricht enthaltene Differenz auslesen und aus dieser Differenz eine lokale Systemzeit berechnen. Jeder Sync-Slave besitzt somit die Fähigkeit und Schnittstelle, um die spezifisch konfigurierte Synchronisierungsnachricht zu lesen und auszuwerten. Das bedeutet, dass jeder einzelne Sync-Slave darauf ausgerichtet ist, nur mittels einer einzelnen Synchronisierungsnachricht hinsichtlich des Arbeitstaktes als auch des Zeittaktes synchronisiert zu werden. Dies hat den Vorteil, dass keine weitere Synchronisierungsnachricht beziehungsweise kein weiterer SyncFrame erforderlich ist, der Vernetzungsgrad minimal gehalten wird und keine zusätzlichen Hardwarekomponenten erforderlich sind.

Nach einer Ausführungsform der Erfindung wird bei einer Zeittakt-Synchronisation zwischen der untergeordneten Domain und einer weiteren untergeordneten Domain der Zeittakt des Zeit-Sync-Masters aus dem Arbeitstakt und der Differenz berechnet, und der so berechnete Zeittakt ohne diese Differenz in einer weiteren Synchronisierungsnachricht an die weitere untergeordnete Domain übertragen. Zum Beispiel addiert der letzte Sync-Slave der untergeordneten Domain, über welchen die unmittelbare Anbindung der weiteren untergeordneten Domain realisiert ist, die akkumulierte Differenz zwischen Zeittakt und Arbeitstakt zum Delay-Feld der Synchronisierungsnachricht und setzt die Differenz zwischen Zeittakt und Arbeitstakt gleich 0. Dies hat den Vorteil, dass zum Beispiel beim Zusammenschalten von mehreren Domains eine differenz-freie Uhrzeit, das heißt letztendlich die allgemeingültige Uhrzeit die vom Zeit-Sync-Master der globalen Domäne vorgegeben war, an den Takt-Sync-Master der nächsten untergeordneten Domain weitergegeben wird.

Nach einer Ausführungsform der Erfindung findet eine Anpassung der Frequenz des Takt-Sync-Masters an die des Zeit-Sync-Masters statt, so dass der Uhrenfehler zwischen Takt-Sync-Master und Zeit-Sync-Master minimiert wird. Dies hat den Vorteil, dass die lokale Systemzeit des Takt-Sync-Masters mit der externen vorgegebenen Uhrzeit weitgehend übereinstimmt.

Die Differenz zwischen den Zeittakten des Takt-Sync-Masters und des Zeit-Sync-Masters sowie zwischen den Zeittakten der einzelnen Sync-Slaves kommt dadurch zustande, dass die systemimmanenten Quarze der einzelnen Komponenten unterschiedliche proprietäre Schwingungsfrequenzen aufweisen. Daraus resultiert jeweils ein Uhrenfehler im Nanosekundenbereich, das heißt, die Systemuhren der einzelnen Komponenten laufen initial nicht synchron.

Nach einer Ausführungsform der Erfindung weist die Synchronisierungsnachricht als einzigen Takt den Arbeitstakt auf. Dies hat den Vorteil, dass die Funktionalität der Synchronisierungsnachricht sich hauptsächlich auf die Gleichtaktung der Automatisierungskomponenten einer Domain einer Automatisierungsanlage konzentriert, ohne durch zusätzliche Ausführungsbefehle belastet zu sein. Dadurch, dass die Abweichung zwischen lokaler Systemzeit der Sync-Slaves von der extern vorgegebenen Uhrzeit nur als Zusatzinformation in der Synchronisierungsnachricht enthalten ist, konzentriert sich die Primäraufgabe des Takt-Sync-Masters im Wesentlichen auf die Gleichtaktung der Automatisierungskomponenten. Dadurch kann zum Beispiel im Wesentlichen der Schwerpunkt der Aufgabe des Takt-Sync-Masters auf den kontinuierlichen Betrieb zum Beispiel einer Produktionsmaschine gelegt werden.

In einem weiteren Aspekt betrifft die Erfindung eine Vorrichtung zur Arbeitstakt- und Zeittaktsynchronisation einer untergeordneten Domain eines Automatisierungsnetzwerkes, umfassend eine Menge von zeitlich zu koordinierender Sync-Slaves, die von einem übergeordneten Zeit-Sync-Master einer übergeordneten Domain bezüglich des Zeittakts synchronisierbar sind, wobei die Sync-Slaves von einem Takt-Sync-Master bezüglich des Arbeitstakts synchronisierbar sind, wobei der Takt-Sync-Master Teil der untergeordneten Domain ist, wobei die Vorrichtung ein Modul zur Mitteilung einer Differenz zwischen dem Zeittakt und dem Arbeitstakt unter Nutzung einer Synchronisierungsnachricht umfasst, wobei die eine Synchronisierungsnachricht zur Synchronisierung der Sync-Slaves bezüglich deren Arbeitstakt dient, wobei als zusätzliche Information diese Differenz in der Synchronisierungsnachricht enthalten ist.

In einem weiteren Aspekt betrifft die Erfindung ein Computerprogramm-Produkt mit von einem Prozessor ausführbaren Instruktionen zur Durchführung des obig beschriebenen Verfahrens.

Im Folgenden werden bevorzugte Ausführungsformen der Erfindung anhand der folgenden Zeichnungen näher erläutert. Es zeigen:
- Figur 1: ein Flussdiagramm, welches die Arbeitstakt- und Zeittaktsynchronisation in einer untergeordneten Domäne einer übergeordneten globalen Domain mit einem die Uhrzeit vorgebenden Zeit-Sync-Masters beschreibt,
- Figur 2: ein Blockdiagramm zur Veranschaulichung des Verfahrens und des Systems zur Arbeitstakt- und Zeittaktsynchronisation einer untergeordneten Domain eines Automatisierungsnetzwerkes.

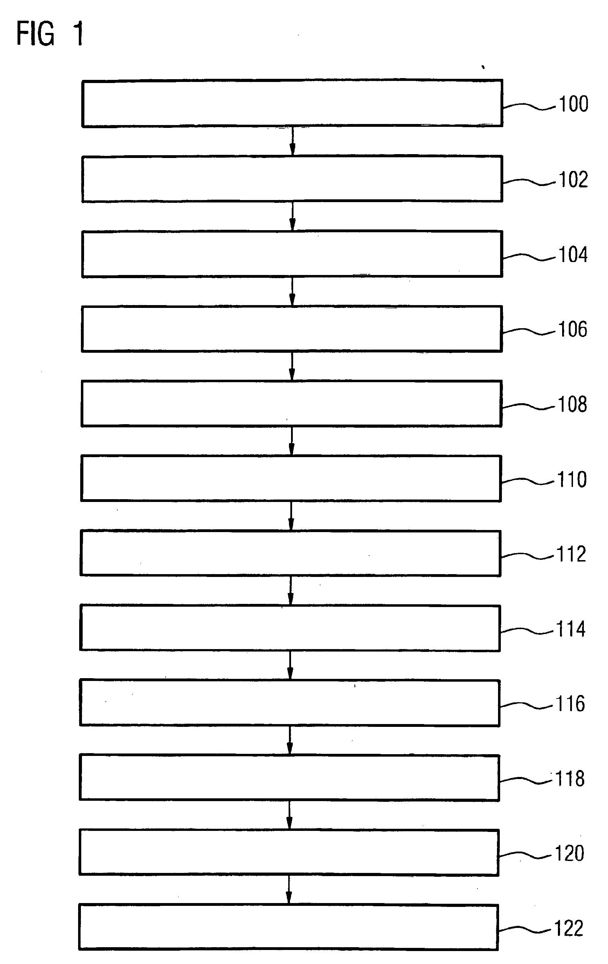

Die Figur 1 zeigt ein Flussdiagramm eines Verfahrens zur Arbeitstakt- und Zeittaktsynchronisation einer untergeordneten Domain eines Automatisierungsnetzwerks. Das Verfahren beginnt zunächst in Schritt 100, wobei der Zeit-Sync-Master einer übergeordneten Domain eine allgemeingültige Uhrzeit in einen Takt-Sync-Master einer untergeordneten Domain sendet. In Schritt 102 übernimmt der Takt-Sync-Master den Zeittakt des Zeit-Sync-Masters, wobei der Takt-Sync-Master auch gleichzeitig die Differenz zwischen dem von außen vorgegebenen Zeittakt und dem Arbeitstakt der Domain ermittelt.

Der Takt-Sync-Master informiert in Schritt 106 einen ersten Sync-Slave bezüglich Arbeitstakt und Differenz zwischen Zeittakt und Arbeitstakt mittels einer einzelnen Synchronisierungsnachricht. In Schritt 108 liest der Sync-Slave aus der empfangenen Synchronisierungsnachricht den Arbeitstakt und die Differenz zwischen Zeittakt und Arbeitstakt aus. Aus dieser Differenz berechnet in Schritt 110 der Sync-Slave seine lokale Systemzeit.

Danach übergibt in Schritt 112 der Sync-Slave wiederum mittels einer einzigen Synchronisierungsnachricht die Information bezüglich Arbeitstakt und der Differenz aus Zeittakt und Arbeitstakt an den nächsten Sync-Slave der Domain. In Schritt 114 wird die Synchronisierungsnachricht an die übrigen Sync-Slaves weitergegeben, wobei jeder einzelne Sync-Slave seine lokale Systemzeit aus der Differenz berechnet.

Der letzte Sync-Slave der untergeordneten Domain addiert in Schritt 116 die akkumulierte Differenz zwischen Zeittakt und Arbeitstakt zum Delay-Feld der Synchronisierungsnachricht und setzt die Differenz auf 0. Somit ist in Schritt 118 der nach außen abgegebene Zeittakt differenzfrei. Bei serieller Verknüpfung von untergeordneten Domains wird somit die allgemeingültige Uhrzeit ohne Differenz in Schritt 120 vom letzten Sync-Slave der vorherigen Domain zum Takt-Sync-Master der folgenden untergeordneten Domain weitergegeben, wobei wiederum nur eine einzelne Synchronisierungsnachricht benötigt wird. In dieser nachfolgenden untergeordneten Domain wiederholt sich gemäß Schritt 122 derselbe Vorgang - wie oben beschrieben - wie er in der vorhergehenden Domain stattgefunden hat.

Alternativ oder zusätzlich zu einer seriellen Verknüpfung von untergeordneten Domains ist auch eine Parallelverschaltung der untergeordneten Domains möglich, wobei dann der untergeordnete Zeit-Sync-Master der globalen Domain an jeden Takt-Sync-Master einer untergeordneten Domain die Uhrzeit direkt ohne eine Frequenzverschiebung übermittelt.

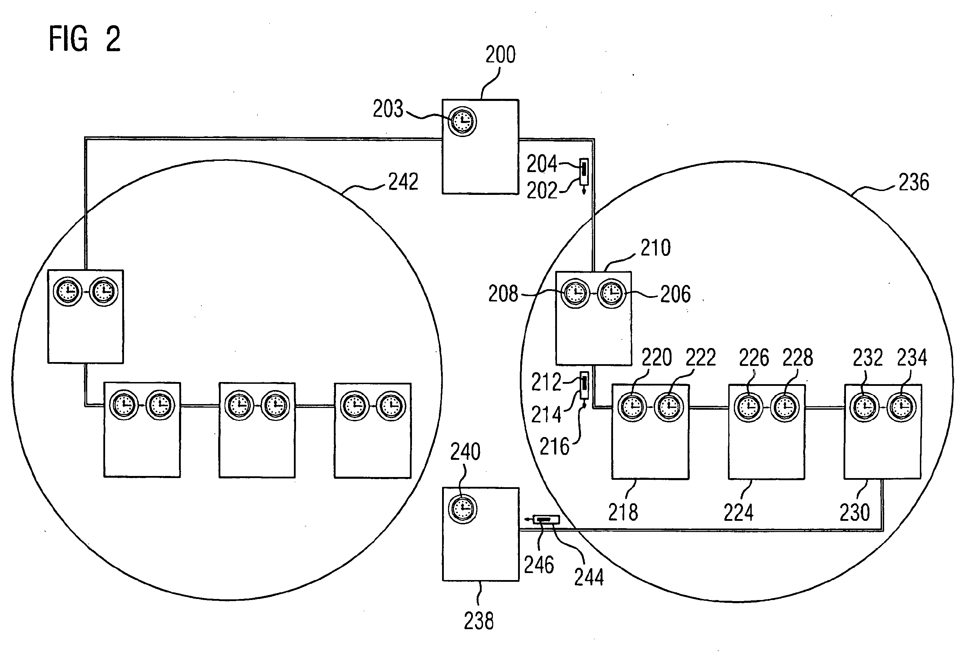

Die Figur 2 zeigt ein Blockdiagramm einer Vorrichtung zur Arbeitstakt- und Zeittaktsynchronisation zweier untergeordneten Domänen, die parallel zum übergeordneten Zeit-Sync-Master 200 einer globalen Domain geschaltet sind. Der übergeordnete Zeit-Sync-Master 200 der globalen Domain sendet eine Synchronisierungsnachricht 202, die eine Information über eine Uhrzeit 204 enthält, an den Takt-Sync-Master 206 der untergeordneten Domain 236, wobei der Takt-Sync-Master 206 die Uhrzeit 203 des übergeordneten Zeit-Sync-Masters 200 als seine eigene Systemzeit 208 übernimmt.

Aus der Differenz zwischen der neu gesetzten Systemzeit 208 und der systemimmanenten Arbeitsuhr 210 ermittelt der Takt-Sync-Master 206 die Differenz zwischen Zeittakt und Arbeitstakt. Die so ermittelte Differenz 214 wird als zusätzliche Information der Synchronisierungsnachricht 216, die primär den Arbeitstakt 212 an den nächsten Sync-Slave 218 übermittelt, weitergegeben.

Der Sync-Slave 218 besitzt die Fähigkeit, die Differenz 214 auszulesen und berechnet aus dieser Differenz 214 seine lokale Systemzeit 220. Die in der Synchronisierungsnachricht 212 gelieferte Information bezüglich des Arbeitstakts 216 bestimmt den Arbeitstakt des Sync-Slaves, welcher als systemimmanente Arbeitsuhr 222 dargestellt wird.

Der Sync-Slave 218 gibt die Synchronisierungsnachricht 212 an den nächsten Sync-Slave 224 weiter, der ebenfalls aus der mit der Synchronisierungsnachricht 212 mitgelieferten Information bezüglich der Differenz 214 zwischen Arbeitstakt und Zeittakt seine lokale Systemzeit 226 neu berechnet. Der mit der Synchronisierungsnachricht 212 gelieferte Arbeitstakt 216 beeinflusst wiederum den Arbeitstakt des Sync-Slaves 224, welcher als systemimmanente Arbeitsuhr 228 dargestellt wird. Dieser Vorgang wiederholt sich und ist letztlich der letzte Sync-Slave 230 des Netzwerks der Domain 236 der die Synchronisierungsnachricht 212 vom vorhergehenden Sync-Slave erhält.

Dieser berechnet ebenfalls aus der Differenz 214 seine lokale Systemzeit 232 und passt seinen Arbeitstakt an den mit der Synchronisierungsnachricht mitgelieferten Arbeitstakt 316 an, was in der systemimmanenten Arbeitsuhr 234 nachvollziehbar ist. Der im Netzwerk der Domain 236 letzte Sync-Slave 230 addiert die akkumulierten Differenzen zwischen Arbeitstakt und Zeittakt in das Delay-Feld der die Domain verlassenden Synchronisierungsnachricht 244, die ebenso wie die vom übergeordneten Zeit-Sync-Master 202 initial gesendete Synchronisierungsnachricht 202 nur noch die Uhrzeit 246 enthält. Diese Synchronisierungsnachricht 244 kann dann entweder an einen Zeit-Sync-Slave 238 der globalen übergeordneten Domäne weitergegeben werden oder in einer anderen Ausführungsform an den Takt-Sync-Master einer anderen untergeordneten Domain.

## Patentansprüche

1. Verfahren zur Arbeitstakt- und Zeittaktsynchronisation einer untergeordneten Domain (236) eines Automatisierungsnetzwerks, umfassend eine Menge von zeitlich zu koordinierender Sync-Slaves (206, 218, 224, 230) der untergeordneten Domain (236), wobei ein übergeordneter Zeit-Sync-Master (200) einer übergeordneten Domain die Sync-Slaves (206, 218, 224, 230) einer untergeordneten Domain (236) bezüglich eines Zeittakts (204) synchronisiert, wobei der Zeit-Sync-Master (200) eine erste Synchronisierungsnachricht (202) an einen Takt-Sync-Master (206) der untergeordneten Domain (236) sendet, wobei die erste Synchronisierungsnachricht (202) eine erste Information (204) über eine Uhrzeit (203) des übergeordneten Zeit-Sync-Masters (200) aufweist, wobei der Takt-Sync-Master (206) diese Uhrzeit (203) als seine eigene Systemzeit (208) übernimmt, wobei im Falle des Takt-Sync-Masters (206) die Systemzeit (208) identisch mit einem Zeittakt (204) ist, wobei mittels des Zeittakts und einer Differenz (214) zwischen dem Zeittakt (204) und dem Arbeitstakt (216) die zeitliche Koordinierung der Sync-Slaves (206, 218, 224, 230) erfolgt, wobei die Sync-Slaves (218, 224, 230) von dem Takt-Sync-Master (206) ferner bezüglich des Arbeitstakts (216) synchronisiert werden, wobei eine einzelne domain-interne Synchronisierungsnachricht (212) zur Synchronisierung der Sync-Slaves (218, 224, 230) bezüglich deren Arbeitstakts (216) und Zeittakts (204) dient, wobei das Verfahren eine Mitteilung der Differenz (214) zwischen dem Zeittakt (204) und dem Arbeitstakt (216) unter Nutzung der domain-internen Synchronisierungsnachricht (212) umfasst, wobei das Verfahren folgende Schritte umfasst:
- Informieren (106) eines ersten Sync-Slaves (218) der Sync-Slaves (218, 224, 230) bezüglich des Arbeitstakts und der Differenz zwischen dem Zeittakt und dem Arbeitstakt mittels der einzelnen domain-internen Synchronisierungsnachricht (212) durch den Takt-Sync-Master (206), und
- Übergeben der Information bezüglich des Arbeitstakts und der Differenz (204) aus dem Zeittakt und dem Arbeitstakt jeweils an einen nächsten Sync-Slave der Sync-Slaves (218, 224, 230) mittels der einzigen domain-internen Synchronisierungsnachricht durch einen jeweils vorhergehenden Sync-Slave der Sync-Slaves (218, 224, 230),
wobei die in der einzelnen domain-internen Synchronisierungsnachricht (212) gelieferte Information bezüglich des Arbeitstakts (216) jeweils den Arbeitstakt der Sync-Slaves bestimmt.

2. Verfahren nach Anspruch 1, wobei bei einer Integration der untergeordneten Domain (236) in die übergeordnete Domain der Arbeitstakt (216) der untergeordneten Domain (236) unverändert beibehalten wird.

3. Verfahren nach Anspruch 1 wobei bei einer Integration der untergeordneten Domain (236) in die übergeordnete Domain der Zeittakt (204) der untergeordneten Domain (236) mit dem Zeittakt (204) der übergeordneten Domain unmittelbar synchronisiert wird.

4. Verfahren nach einem der vorhergehenden Ansprüche, wobei der Arbeitstakt (216) und der Zeittakt (204) durch absolute Zeitangaben (208, 206, 220, 222, 226, 228, 232, 234) gegeben sind.

5. Verfahren nach Anspruch 4, wobei jeder einzelne Sync-Slave (218, 224, 230) der untergeordneten Domain (236) die in der domain-internen Synchronisierungsnachricht (212) enthaltene Differenz (214) auslesen kann und aus dieser Differenz (214) seine lokale Systemzeit (220, 226, 232) berechnen kann.

6. Verfahren nach Anspruch 1, wobei bei einer Zeittakt-Synchronisation zwischen der untergeordneten Domain (236) und einer weiteren untergeordneten Domain (242) der Zeittakt (204) des Zeit-Sync-Masters (200) aus dem Arbeitstakt (216) und der Differenz (214) berechnet wird und der so berechnete Zeittakt (204) bei einem Übergang von der untergeordneten Domain (236) in die weitere untergeordnete Domain (242) ohne diese Differenz (214) und/oder mit der durch einen letzten Sync-Slave der Sync-Slaves (218, 224, 230) der untergeordneten Domain auf Null gesetzten Differenz in einer weiteren Synchronisierungsnachricht (244) an die weitere untergeordnete Domain (242) übertragen wird.

7. Verfahren nach Anspruch 4, wobei eine Anpassung der Frequenz des Takt-Sync-Masters (206) an die des Zeit-Sync-Masters (200) stattfindet, wobei eine Rate Compensation zwischen der Uhrzeit des Zeit-Sync-Masters der übergeordneten Domain und der lokalen Systemzeit des Takt-Sync-Masters der untergeordneten Domain gleich 0 gesetzt wird, so dass der Uhrenfehler zwischen Takt-Sync-Master (206) und Zeit-Sync-Master (200) minimiert wird.

8. Verfahren nach Anspruch 1, wobei die domain-interne Synchronisierungsnachricht (212) als einzigen Takt den Arbeitstakt (216) aufweist.

9. Computerprogramm-Produkt mit von einem Prozessor ausführbaren Instruktionen zur Durchführung der Verfahrensschritte gemäß einem der vorigen Ansprüche.

10. Vorrichtung zur Arbeitstakt- und Zeittaktsynchronisation einer untergeordneten Domain eines Automatisierungsnetzwerks, umfassend eine Menge von zeitlich zu koordinierender Sync-Slaves (206, 218, 224, 230) der untergeordneten Domain (236), wobei ein übergeordneter Zeit-Sync-Master (200) einer übergeordneten Domain dazu ausgebildet ist, die Sync-Slaves (206, 218, 224, 230) einer untergeordneten Domain (236) bezüglich eines Zeittakts (204) zu synchronisieren, wobei der Zeit-Sync-Master (200) dazu ausgebildet ist, eine erste Synchronisierungsnachricht (202) an einen Takt-Sync-Master (206) der untergeordneten Domain (236) zu senden, wobei die erste Synchronisierungsnachricht (202) eine erste Information (204) über eine Uhrzeit (203) des übergeordneten Zeit-Sync-Masters (200) aufweist, wobei der Takt-Sync-Master (206) dazu ausgebildet ist, diese Uhrzeit (203) als seine eigene Systemzeit (208) zu übernehmen, wobei im Falle des Takt-Sync-Masters (206) die Systemzeit (208) identisch mit einem Zeittakt (204) ist, wobei der Zeittakt dazu ausgebildet ist, zusammen mit einer Differenz (214) zwischen dem Zeittakt (204) und dem Arbeitstakt (216) die zeitliche Koordinierung der Sync-Slaves (206, 218, 224, 230) vorzunehmen, wobei die Sync-Slaves (218, 224, 230) dazu ausgebildet sind, von dem Takt-Sync-Master (206) ferner bezüglich des Arbeitstakts (216) synchronisiert zu werden, wobei die Vorrichtung ein Modul zur Mitteilung der Differenz (214) zwischen dem Zeittakt (204) und dem Arbeitstakt (216) unter Nutzung nur einer domain-internen Synchronisierungsnachricht (212) umfasst, wobei die eine domain-interne Synchronisierungsnachricht (212) zur Synchronisierung der Sync-Slaves (218, 224, 230) bezüglich deren Arbeitstakts (216) dient,
- wobei der Takt-Sync-Master (206) dazu ausgebildet ist, einen ersten Sync-Slave (218) der Sync-Slaves (218, 224, 230) bezüglich des Arbeitstakts und der Differenz zwischen dem Zeittakt und dem Arbeitstakt mittels der einzelnen domain-internen Synchronisierungsnachricht (212) zu informieren, und
- wobei ein jeweils vorhergehender Sync-Slave der Sync-Slaves (218, 224, 230) dazu ausgebildet ist, die Information bezüglich des Arbeitstakts und der Differenz aus dem Zeittakt und dem Arbeitstakt jeweils an einen nächsten Sync-Slave der Sync-Slaves (218, 224, 230) mittels der einzigen domain-internen Synchronisierungsnachricht zu übergeben,
wobei die in der einzelnen domain-internen Synchronisierungsnachricht (212) gelieferte Information bezüglich des Arbeitstakts (216) dazu ausgebildet ist, jeweils den Arbeitstakt der Sync-Slaves zu bestimmen.

11. Vorrichtung nach Anspruch 10,
wobei bei einer Integration der untergeordneten Domain (236) in die übergeordnete Domain der Arbeitstakt (216) der untergeordneten Domain (236) unverändert beibehalten wird.

## Claims

1. Method for operating clock and timing clock synchronisation of a subordinate domain (236) of an automation network, comprising a quantity of sync slaves (206, 218, 224, 230) of the subordinate domain (236) to be coordinated in time, wherein a higher-ranking time sync master (200) of a higher-ranking domain synchronises the sync slaves (206, 218, 224, 230) of a subordinate domain (236) in relation to a timing clock (204), wherein the time sync master (200) sends a first synchronisation message (202) to a clock sync master (206) of the subordinate domain (236), wherein the first synchronisation message (202) contains first information (204) about a time (203) of the higher-ranking time sync master (200), wherein the clock sync master (206) accepts this time (203) as its own system time (208), wherein, in the case of the clock sync master (206), the system time (208) is identical to the timing clock (204), wherein the time coordination of the sync slaves (206, 218, 224, 230) is carried out by means of the timing clock and a difference (214) between the timing clock (204) and the operating clock (216), wherein the sync slaves (218, 224, 230) are further synchronised by the clock sync master (206) in relation to the operating clock (216), wherein a single domain-internal synchronisation message (212) serves to synchronise the sync slaves (218, 224, 230) in relation to their operating clock (216) and timing clock (204), wherein the method comprises a notification of the difference (214) between the timing clock (204) and the operating clock (216) using the domain-internal synchronisation message (212), wherein the method comprises the following steps:
- Informing (106) a first sync slave (218) of the sync slaves (218, 224, 230) about the operating clock and the difference between the timing clock and the operating clock by means of the individual domain-internal synchronisation message (212) from the clock sync master (206), and
- Transferring the information about the operating clock and the difference (204) between the timing clock and the operating clock to a next sync slave of the sync slaves (218, 224, 230) in each case by means of the single domain-internal synchronisation message from a respective preceding sync slave of the sync slaves (218, 224, 230),
wherein the information supplied in the individual domain-internal synchronisation message (212) about the operating clock (216) determines the respective operating clock of the sync slaves.

2. Method according to claim 1, wherein, for an integration of the subordinate domain (236) into the higher-ranking domain, the operating clock (216) of the subordinate domain (236) is retained unchanged.

3. Method according to claim 1, wherein, for an integration of the subordinate domain (236) into the higher-ranking domain, the timing clock (204) of the subordinate domain (236) is directly synchronised with the timing clock (204) of the higher-ranking domain.

4. Method according to one of the preceding claims, wherein the operating clock (216) and the timing clock (204) are provided by absolute time specifications (208, 206, 220, 222, 226, 228, 232, 234).

5. Method according to claim 4, wherein each individual sync slave (218, 224, 230) of the subordinate domain (236) can read out the difference (214) contained in the domain-internal synchronisation message (212) and can calculate its local system time (220, 226, 232) from this difference (214).

6. Method according to claim 1, wherein, for a timing clock synchronisation between the subordinate domain (236) and a further subordinate domain (242), the timing clock (204) of the time sync master (200) is calculated from the operating clock (216) and the difference (214) and the timing clock (204) thus calculated, for a transition from the subordinate domain (236) into the further subordinate domain (242) without this difference (214) and/or with the difference set to zero by a last sync slave of the sync slaves (218, 224, 230) of the subordinate domain, is transmitted in a further synchronisation message (244) to the further subordinate domain (242).

7. Method according to claim 4, wherein the frequency of the clock sync master (206) is adapted to that of the time sync master (200), wherein a rate compensation between the time of the time sync master of the higher-ranking domain and the local system time of the clock sync master of the subordinate domain is set equal to 0, so that the clock error between clock sync master (206) and time sync master (200) is minimised.

8. Method according to claim 1, wherein the domain-internal synchronisation message (212) has the operating clock (216) as its only clock.

9. Computer program product with instructions able to be executed by a processor for carrying out the method steps according to one of the preceding claims.

10. Facility for operating clock and timing clock synchronisation of a subordinate domain of an automation network, comprising a quantity of sync slaves (206, 218, 224, 230) of the subordinate domain (236) to be coordinated in time, wherein a higher-ranking time sync master (200) of a higher-ranking domain is embodied to synchronise the sync slaves (206, 218, 224, 230) of a subordinate domain (236) in relation to a timing clock (204), wherein the time sync master (200) is embodied to send a first synchronisation message (202) to a clock sync master (206) of the subordinate domain (236), wherein the first synchronisation message (202) contains first information (204) about a time (203) of the higher-ranking time sync master (200), wherein the clock sync master (206) is embodied to accept this time (203) as its own system time (208), wherein, in the case of the clock sync master (206), the system time (208) is identical to a timing clock (204), wherein the timing clock is embodied, together with a difference (214) between the timing clock (204) and the operating clock (216), to undertake the timing coordination of the sync slaves (206, 218, 224, 230), wherein the sync slaves (218, 224, 230) are embodied to also be synchronised by the clock sync master (206) in relation to the operating clock (216), wherein the facility comprises a module for notification of the difference (214) between the timing clock (204) and the operating clock (216) using only one domain-internal synchronisation message (212), wherein the one domain-internal synchronisation message (212) serves to synchronise the sync slaves (218, 224, 230) in relation to their operating clock (216),
- wherein the clock sync master (206) is embodied to inform a first sync slave (218) of the sync slaves (218, 224, 230) about the operating clock and the difference between the timing clock and the operating clock by means of the single domain-internal synchronisation message (212), und
- wherein a respective preceding sync slave of the sync slaves (218, 224, 230) is embodied in each case to transfer the information about the operating clock and the difference between the timing clock and the operating clock to a next sync slave of the sync slaves (218, 224, 230) by means of the single domain-internal synchronisation message,
wherein the information provided in the individual domain-internal synchronisation message (212) about the operating clock (216) is embodied to determine the operating clock of the sync slaves in each case.

11. Facility according to claim 10, wherein, for an integration of the subordinate domain (236) into the higher-ranking domain, the operating clock (216) of the subordinate domain (236) is retained unchanged.

## Revendications

1. Procédé de synchronisation d'une horloge de traitement et d'une horloge temporelle d'un domaine ( 236 ) subordonnée d'un réseau d'automatisation comprenant un certain nombre d'esclaves Sync ( 206, 218, 224, 230 ) à coordonner dans le temps du domaine ( 236 ) subordonné, un maître Sync ( 200 ) de temps supérieur hiérarchiquement d'un domaine supérieur hiérarchiquement synchronisant les esclaves Sync ( 206, 218, 224, 230 ) d'un domaine ( 236 ) subordonné par rapport à une horloge ( 204 ) de temps, le maître Sync de temps envoyant un premier message ( 202 ) de synchronisation à un maître Sync ( 206 ) d'horloge du domaine ( 236 ) subordonné, le premier message ( 202 ) de synchronisation comportant une première information ( 204 ) sur un temps ( 203) d'horloge du maître Sync de temps supérieur hiérarchiquement, le maître Sync ( 206 ) d'horloge prenant ce temps ( 203 ) d'horloge comme son propre temps ( 208 ) de système, dans lequel, dans le cas du maître Sync ( 206 ) d'horloge, le temps ( 208 ) du système est identique à une horloge ( 204 ) de temps, dans lequel la coordination temporelle des esclaves Sync ( 206, 218, 224, 230 ) s'effectue au moyen de l'horloge de temps et d'une différence ( 214 ) entre l'horloge ( 204 ) de temps et l'horloge (216 ) de traitement, dans lequel les esclaves Sync ( 218, 224, 230 ) sont synchronisés en outre par rapport à l'horloge ( 216 ) de traitement par le maître Sync ( 206 ) d'horloge, dans lequel un message ( 21 ) de synchronisation individuel interne au domaine sert à la synchronisation des esclaves Sync ( 218, 224, 230 ) par rapport à leur horloge ( 216 ) de traitement et à leur horloge ( 204 ) de temps, le procédé comprenant une communication de la différence ( 214 ) entre l'horloge ( 204 ) de temps et l'horloge ( 216 ) de traitement en utilisant le message ( 212) de synchronisation interne au domaine, le procédé comprenant les stades suivants
- information ( 106 ) d'un premier esclave Sync ( 218 ) parmi les esclaves Sync ( 218, 224, 230 ) en ce qui concerne l'horloge de traitement et la différence entre l'horloge de temps et l'horloge de traitement au moyen du message ( 212 ) de synchronisation individuelle interne au domaine par le maître Sync ( 206 ) d'horloge, et
- transmission de l'information concernant l'horloge de traitement et la différence ( 204 ) entre l'horloge de temps et l'horloge de traitement respectivement à un escale Sync voisin parmi les esclaves Sync ( 218, 224, 230 ) au moyen du message de synchronisation unique interne au domaine par un esclave Sync précédent respectivement parmi les esclaves Sync ( 218, 224, 230 ),
dans lequel l'information fournie dans le message ( 212 ) de synchronisation individuel interne au domaine en ce qui concerne l'horloge ( 216 ) de traitement définit respectivement l'horloge de traitement des esclaves Sync.

2. Procédé suivant la revendication 1, dans lequel lors d'une intégration du domaine ( 236 ) subordonnée dans le domaine supérieur hiérarchiquement, on laisse inchanger l'horloge ( 216) de traitement du domaine ( 236) subordonnée.

3. Procédé suivant la revendication 1, dans lequel lors d'une intégration du domaine ( 236 ) subordonnée dans le domaine supérieur hiérarchiquement, on synchronise directement l'horloge ( 204) de temps du domaine ( 236 ) subordonné avec l'horloge ( 204 ) de temps du domaine supérieur hiérarchiquement.

4. Procédé suivant l'une des revendications précédentes, dans lequel l'horloge ( 216 ) de traitement et l'horloge ( 204 ) de temps sont données par des indications ( 208, 206, 220, 222, 226, 228, 232, 234 ) de temps absolu.

5. Procédé suivant la revendication 4, dans lequel chaque esclave Sync ( 218, 224, 230 ) individuel du domaine ( 236 ) subordonné peut lire la différence ( 214 ) contenue dans le message ( 212 ) de synchronisation interne au domaine et peut calculer son temps ( 220, 226, 232 ) de système local à partir de cette différence ( 214 ).

6. Procédé suivant la revendication 1, dans lequel lors d'une synchronisation d'une horloge de temps entre le domaine ( 236 ) subordonné et un autre domaine ( 242 ) subordonné, l'horloge ( 204 ) de temps du maître Sync ( 200 ) de temps est calculée à partir de l'horloge ( 216 ) de traitement et de la différence ( 214 ) et l'horloge ( 204 ) de temps ainsi calculée est transmise à l'autre domaine ( 242 ) subordonnée dans un autre message ( 244 ) de synchronisation lors d'un passage du domaine ( 236 ) subordonné à l'autre domaine ( 242 ) subordonné sans cette différence et/ou avec la différence mise à zéro par un dernier esclave Sync parmi les esclaves Sync ( 218, 224, 230 ) du domaine subordonné.

7. Procédé suivant la revendication 4, dans lequel une adaptation de la fréquence du maître Sync ( 206 ) d'horloge à celle du maître Sync ( 220 ) de temps à lieu, dans lequel une compensation de cadence entre le temps d'horloge du maître Sync de temps du domaine supérieur hiérarchiquement et du système de temps local du maître Sync d'horloge du domaine subordonné est mise égale à zéro de manière à mimiser l'erreur l'horloge entre le maître Syn ( 206 ) d'horloge et le maître Sync ( 200 ) de temps.

8. Procédé suivant la revendication 1, dans lequel le message ( 212 ) de synchronisation interne au domaine a l'horloge ( 216 ) de traitement comme horloge unique.

9. Produit de programme d'ordinateur ayant des instructions pouvant être exécutées par un processeur pour effectuer les stades du procédé suivant l'une des revendications précédentes.

10. Dispositif de synchronisation d'une horloge de traitement et d'une horloge de temps d'un domaine subordonné d'un réseau d'automatisation comprenant un certain nombre d'esclaves Sync ( 206, 218, 224, 230 ) à coordonner dans le temps du domaine ( 236 ) subordonné, dans lequel un maître Sync ( 200 ) de temps supérieur hiérarchiquement d'un domaine supérieur hiérarchiquement est constitué pour synchroniser les esclaves Sync ( 206, 218, 224, 230 ) d'un domaine ( 236 ) subordonné par rapport à une horloge ( 204 ) de temps, le maître Sync ( 200 ) de temps étant constitué pour envoyer un premier message ( 202 ) de synchronisation à un maître Sync ( 206 ) d'horloge du domaine ( 236 ) subordonné, le premier message ( 202 ) de synchronisation ayant une première information ( 204 ) sur un temps ( 203 ) d'horloge du maître Sync ( 200 ) de temps supérieur hiérarchiquement, le maître Sync ( 206 ) d'horloge étant constitué pour prendre ce temps ( 203 ) d'horloge comme son propre temps ( 208 ) de système, dans lequel, dans le maître Sync ( 206 ) d'horloge, le temps ( 208 ) du système est identique à une horloge ( 204 ) de temps, l'horloge de temps étant constitué pour, ensemble avec une différence ( 214 ) entre l'horloge ( 204 ) de temps et l'horloge ( 216 ) de traitement effectuer, la coordination temporelle des esclaves Sync ( 206, 218, 224, 230 ), les esclaves Sync ( 218, 224, 230 ) étant constitués pour être, en outre, synchronisés par rapport à l'horloge ( 216 ) de traitement par le maître Syn ( 206 ) d'horloge, le dispositif comprenant un module de communication de la différence ( 214 ) entre l'horloge ( 204 ) de temps et l'horloge ( 216 ) de traitement en utilisant seulement un message ( 212 ) de synchronisation interne au domaine, le message ( 212 ) de synchronisation interne au domaine servant à la synchronisation des esclaves Sync ( 218, 224, 230 ) par rapport à leur horloge ( 216 ) de traitement,
- dans lequel, le maître Sync ( 206 ) d'horloge est constitué pour informer au moyen du message ( 212 ) de synchronisation individuel interne au domaine un premier esclave Sync ( 218 ) parmi les esclaves Sync ( 218, 224, 230 ) en ce qui concerne l'horloge de traitement et la différence entre l'horloge de temps et l'horloge de traitement et
- dans lequel un esclave Sync précédent parmi les esclaves Sync ( 218, 224, 230 ) est constitué pour transmettre, au moyen du message de synchronisation unique interne au domaine, l'information en ce qui concerne l'horloge de traitement et la différence entre l'horloge de temps et l'horloge de traitement respectivement à un esclave Sync voisin parmi les esclaves Sync ( 218, 224, 230 ),
dans lequel l'information fournie dans le message ( 212 ) de synchronisation individuel interne au domaine en ce qui concerne l'horloge ( 216 ) de traitement est constituée pour définir respectivement l'horloge de traitement des esclaves Sync.

11. Dispositif suivant la revendication 10, dans lequel, lors d'une intégration du domaine ( 236 ) subordonnée dans le domaine supérieur hiérarchiquement, on laisse inchanger l'horloge ( 216 ) de traitement du domaine ( 236 ) subordonnée.
